# EUROPEAN PATENT APPLICATION

(11) **EP 0 820 921 A2**
(43) Date of publication of application: **28.01.1998**
(21) Application number: 97112118.1
(22) Date of filing: 16.07.1997
(51) Int. Cl.: B62J 1/08

(54) **Device for changing the position of a bicycle saddle**

(30) Priority: 25.07.1996 IT MI961566
(71) Applicant: COLNAGO ERNESTO & C. S.r.l., 20040 Cambiago (Milano) (IT)
(72) Inventor: Colnago, Ernesto, 20040 Cambiago (Milan) (IT)
(74) Representative: Giambrocono, Alfonso, Dr. Ing.

(57) **Abstract**

A device for modifying the distance of the saddle (21) from the head tube axis (W) of a bicycle, said saddle (21) being carried by a tube (4) inserted into the seating column (3) of the bicycle frame (1), comprises means (6) for shifting the axis (H) of the tube (4) parallel to itself along the bicycle central plane into at least two positions, of which one is closer to and one is further from the head tube axis (W), said means effecting this shifting while maintaining the seat portion (21A) of the saddle (21) in one and the same plane.

## Description

This invention relates to a device for modifying the distance of the saddle from the axis of a bicycle head tube.

The main characterising elements of a bicycle are known to be the height of its frame and the inclination of the seating column with which the saddle tube is associated. This latter characteristic (the seating column inclination) influences the distance of the saddle from the head tube axis and the method in which the user exerts action on the pedals (ie his "pedalling"). Consequently, a user taking part in sports or pleasure activities but who also requires a vehicle matching his own physical characteristics chooses a bicycle with a frame of a particular height and a seating column having a particular inclination which match his said physical characteristics. Having chosen the height, the user may however discover, subsequent to the purchase of the bicycle, that the seating column inclination (and hence the distance of the saddle from the head tube axis) is not appropriate to his physical characteristics in that it does not enable him to exert effective action on the pedals. Alternatively, having chosen the bicycle the user may discover that the distance of the saddle from the head tube axis is not such as to enable him to effectively operate the pedals in particular circumstances (for example along a journey with various uphill and downhill sections).

Various devices are known for modifying the distance of the saddle from the head tube axis. These devices generally comprise means for shifting the saddle parallel to itself on the saddle tube so as to move the saddle towards or away from the head tube axis. Although these known solutions achieve their purpose, they are often difficult to implement and use. Moreover they often present mechanical problems which hinder their use over a long time period. This is particularly so if the position of the saddle on the saddle tube is frequently changed to adapt its position, relative to the head tube axis, to different types of terrain on which the bicycle is used.

In addition, these known solutions are not always aesthetically attractive.

An object of the present invention is to provide an improved device for modifying the distance of the saddle from the head tube axis.

A particular object of the invention is to provide a device of the stated type which is of simple construction, is easily used, and of which the presence in no way changes the vehicle appearance.

The present invention will be more apparent from the accompanying drawing, which is provided by way of example only, and in which :

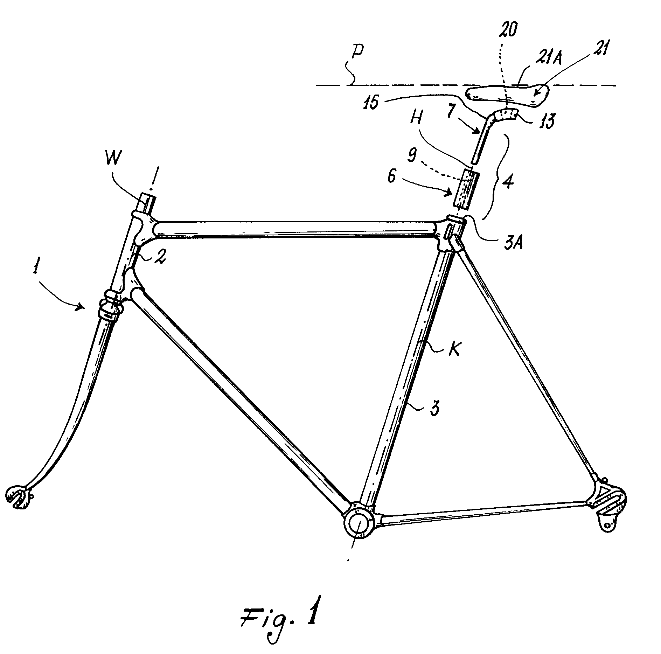

Figure 1 is a partial exploded view of a bicycle provided with the device of the invention;
Figure 2 is a perspective view of the device of the invention associated with a part of the bicycle frame; and
Figure 3 is a partial perspective view of a modification of the device of the invention.

With reference to said figures, a bicycle comprises a frame 1 having a head tube 2, and a seating column 3 for slidingly containing a height-adjustable saddle tube 4. The head tube has an axis W and the seating column 3 an axis K.

According to the invention, the saddle tube 4 comprises two portions 6 and 7 associated with each other. The first portion 6 is arranged to be inserted as an interference fit into the seating column 3 and comprises an eccentric preferably through hole 9 of axis H. This enables the dimensions of said portion to be limited while still enabling it to properly support the portion 7. This latter is inserted into said eccentric hole 9 and is locked therein by socket-head screws 10 inserted into holes 11 having their axes perpendicular to that of the hole and opening into this latter.

The portion 7 comprises an end part 13 projecting from the hole 9 and extending curved from a substantially cylindrical part 15 of said portion movable within the hole 9 and provided with opposing surface flats 16 and 17 which are 180° apart and with which the screws 10 cooperate to retain said portion 7 within the hole in the portion 6 after the position of the saddle from the head tube and its height from the ground have been defined. The said end part 13 also comprises a through elongate slot-like hole 20 able to receive usual means (not shown) for fixing a saddle 21 to the tube 4.

Finally, the upper part 3A of the seating column 3 is slotted longitudinally at 25 through its surface so as to be able to yield elastically towards the interior of the seating column. In this manner by means of a usual clamping band or equivalent known element the part 3A can be tightened onto the portion 6 so as to lock it into the seating column 3.

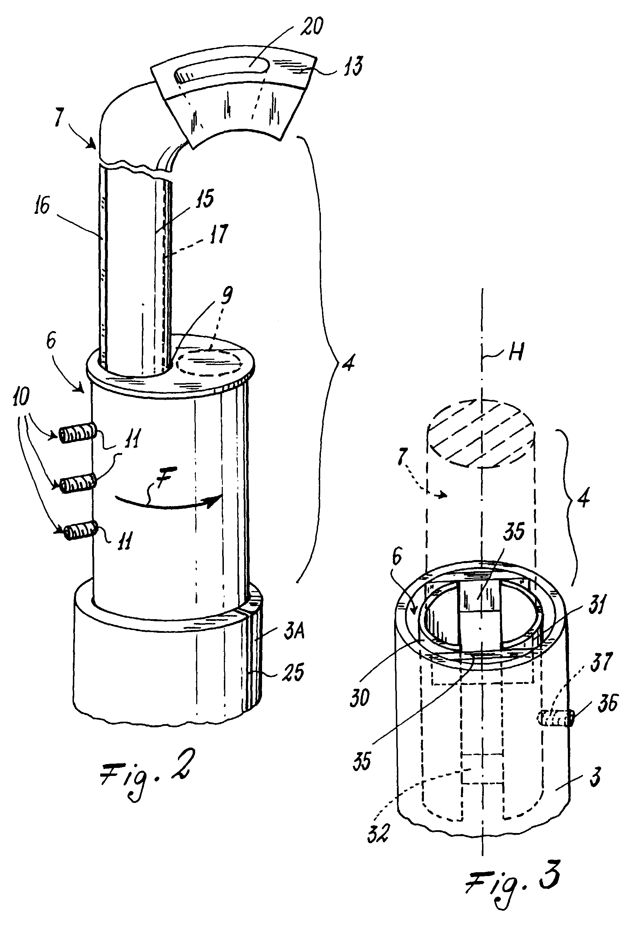

The device of the invention is used as follows. In order to modify the distance of the saddle 4 from the head tube axis (or to modify the distance of the axis H of the portion 7 of the tube 4 from the axis W), the element 6 is rotated within the seating column 3 (arrow F of Figure 2). Assuming it to initially be in the position shown in the figures, the said operation hence moves the hole 9 into the dashed-line position shown in Figure 2. Before this rotation the screws 10 are loosened in order to be able to maintain a constant spatial orientation of the saddle relative to the portion 6. In other words, during the rotation of the portion 6 within the seating column 3, the portion 7 is maintained fixed (and therefore does not rotate), so shifting the saddle parallel to itself while maintaining the seat portion 21A of the saddle always in the same plane P. Having done this the screws 10 are tightened and the portion 6 of the seating column 3 is locked in its initial inserted position.

A preferred embodiment of the invention has been described. Others are however possible. For example, in Figure 3 (in which parts corresponding to the already described figures are indicated by the same reference numerals), the portion 6 is defined by two semi-cylindrical portions 30 and 31 connected together by at least one part 32 slackly inserted within the seating column 3 and containing the portion 7. The portions 30 and 31 cooperate peripherally with opposing guide elements 35 ensuring that the portion 6 moves along the central plane of the bicycle. This movement is obtained by an least one adjustment screw 36 positioned on one side of the seating column 3. This screw cooperates with a female thread associated with one of said portions 30 and 31 and is freely rotatable within a seat 37 in the seating column 3. Its rotation causes the axis H of the saddle tube 4 to move along the central plane of the bicycle, said movement being guided by guide elements 35 and causing the axis H to move continuously along said plane. In this manner the saddle 21, which always moves parallel to itself to always maintain the seat portion 21A in the plane P, can be made to withdraw from or approach the head tube axis.

Other embodiments of the invention are also possible in the light of this description, and are to be considered as falling within the scope of the present document.

## Claims

1. A device for modifying the distance of the saddle (21) from the head tube axis (W) of a bicycle, said saddle (21) being carried by a tube (4) inserted into the seating column (3) of the bicycle frame (1), characterised by comprising shifter means (6) enabling the axis (H) of the tube (4) to assume at least two working positions in the bicycle central plane, of which one is closer to and one is further from the head tube axis (W).

2. A device as claimed in claim 1, characterised in that the shifter means define the saddle tube (4) and comprise at least two portions (6, 7) one inserted in the other, a first portion being inserted into the seating column (3) and comprising an eccentric hole (9) into which the second portion (7) for supporting the saddle (21) is inserted, the axis (H) of said hole (H) defining the axis of the saddle tube (4).

3. A device as claimed in claim 2, characterised in that the first portion (6) cooperates as an interference fit with the seating column (3), this latter comprising means for locking within it said portion.

4. A device as claimed in claim 2, characterised in that the second portion (7) of the saddle tube (4) is slidingly inserted into the eccentric hole (9) in the first portion (6), means (10) being provided for locking said second portion (7) in the first (6).

5. A device as claimed in claim 2, characterised in that the first portion (6) of the saddle tube (4) is rotatable within the seating column (3) so as to shift the axis (H) of said tube, the seat portion 21A lying always in one and the same plane during the rotation.

6. A device as claimed in claim 1, characterised in that the shifter means are means able to continuously shift the axis (H) of the saddle tube (4) along the bicycle central plane, the seat portion (21A) of the saddle (21) always lying in one and the same plane during this shifting.

7. A device as claimed in claim 6, characterised in that the shifter means are a member (6) containing an element (7) with which the saddle (21) is associated and of which the axis defines the axis (H) of the saddle tube (4), said member being movable parallel to itself within the seating column (3), for this shifting there being provided actuator means (36) associated with said seating column (3).

8. A device as claimed in claim 7, characterised in that the member (6) containing the element (7) with which the saddle (21) is associated comprises two mutually associated semi-cylindrical elements (30, 31) containing said element and cooperating peripherally with guide means (35) which enable them to move parallel to themselves within the seating column (3).

9. A device as claimed in claim 7, characterised in that the actuator means are at least one screw (36) inserted freely rotatable into a seat (37) in the seating column (3) and cooperating with a threaded seat provided in the member (6) positioned within said seating column (3) and containing the element (7) with which the saddle (27) is associated, rotation of said screw within the seat (37) in said seating column (3) causing said member (6) to move parallel to itself within this latter, with consequent movement of the axis of the saddle tube (4).
